# EUROPEAN PATENT SPECIFICATION

(11) **EP 1 477 026 B1**
(45) Date of publication and mention of the grant of the patent: **01.06.2011**
(21) Application number: 03737384.2
(22) Date of filing: 08.02.2003
(51) Int. Cl.: G06T 1/00, H04N 1/32

(54) **A METHOD OF INCORPORATING A SECONDARY IMAGE INTO A PRIMARY IMAGE AND SUBSEQUENTLY REVEALING SAID SECONDARY IMAGE**
VERFAHREN ZUM EINBETTEN UND SPÄTEREN SICHTBARMACHEN EINES SEKUNDÄREN BILDES IN EINEM PRIMÄREN BILD
PROCÉDÉ D'INCORPORATION ET RÉVÉLATION SUBSÉQUENTE D'UNE IMAGE SÉCONDAIRE DANS UNE IMAGE PRIMAIRE

(30) Priority: 08.02.2002 GB 0202962
(43) Date of publication of application: 17.11.2004
(73) Proprietor: Nautilus GB Limited, Hawk Green Marple, Stockport SK6 7JW (GB)
(72) Inventor: SMITH, Ian, Rodney, Stockport, Cheshire SK6 8AF (GB)
(74) Representative: McCallum, Graeme David
(86) International application number: PCT/GB2003/000551
(87) International publication number: WO 2003/067892

(56) References cited:
- EP-A- 0 953 939
- EP-A- 1 102 208
- WO-A-01/87632
- WO-A-98/07572
- US-B1- 6 171 734

## Description

The invention relates to a method of incorporating a secondary image into a primary image, and revealing the secondary image.

It has long been known to print documents, to protect them from forgery, using fine patterns constituting a background for a main image. The more complex the fine pattern, the more difficult it is to reproduce.

The developments of xerography, laser printing and scanning have created new problems for the printer. Special measures have been devised to make security documents uncopiable by standard or even advanced state of the art copiers and scanners, EP-A-0920383 being an example of such in which an "object" is worked into a background pattern by linear components of the background being "hollowed" ie. thick lines becoming slightly spaced thin tines. Such hollowed regions are not readily visible to the naked eye, so they do not mar the appearance of the major image, but they "fool" a photocopier, and are visible in a photocopy. The "object" in question can be a word, such for example, as "FORGERY".

EP-A-0953939 discloses a system and method for digital watermark embedding and retrieval using phase shift stochastic (stochastically clustered) screens. Watermarks are embedded based on the phase shift of clustered halftone screens. Therefore, the hidden information, or invisible watermark, can be detected and visualized by correlating clusters as opposed to the pixel-based correlation required by other methods. Therefore, the detection of watermarks is much easier, especially when distortions have been introduced into the embedded image. By replacing regular cluster halftone screens with stochastic screens for hidden watermarks, watermarks can quickly be embedded and retrieved.

EP-A-102208 discloses a method to invisibly embed additional information in a base pattern and to visualize the additional information, a dislocation is provided in a boundary between the base pattern composed of striped thin lines and the additional information pattern composed of striped thin lines. This dislocation makes the stripes of the patterns discontinuous. The additional information pattern is invisibly embedded in the base pattern such that a sequence of dislocations in the stripes forming the boundary is at an angle equal to or larger than a predetermined angle with respect to the stripe direction. WO-A-9807572 discloses a printed security document which comprises, for example, a background pattern formed from points or lines. In order to protect the document against copying, an object, for example text, is incorporated into this uniform background pattern. The text is incorporated such that, at the points where the text is located, the individual lines of the background pattern are split into two partial lines which are each only approximately half as wide as the original line. This division of the components of the background pattern is invisible or only visible with difficulty to the naked eye. If an original printed security document of this type is copied on a conventional photocopier, although the copy shows the original, relatively wide lines of the background pattern, the partial lines formed by their division will not be copied at all, or only very badly, such that the hidden text appears clearly on the copy.

WO-A-187632 discloses a printing template which comprises a stored data set of dot positions for printing an array of dots onto a substrate, which incorporates a security zone in which zone dots in the array are laterally displaced relative to a background zone. There is further incorporated a transition zone at the boundary between the security zone and the background zone, in which zone the extent of displacement of the print dots undergoes a progressive increase from a minimally displaced position at an edge of the transition zone adjacent to the background zone to an essentially fully displaced position at an edge of the transition zone adjacent to the security zone. A printed article and printing template and method for their preparation are also described.

This is fine for demoralising the would-be forger who is sophisticated enough only to rely on a photocopier. The first copy taken on the machine appears with the word "FORGERY" in it, and the would-be forger is supposed to abandon the attempt.

The determined forger, however, will realise that he is simply using the wrong copying technique, and switch to something more appropriate.

Essentially, the truth of the matter is that anything that can be made can be copied, if enough resource is put into the attempt. It is, clearly, only necessary to replicate the production process for the original, and the copy will be perfect. Where there is sufficient incentive, the cost of replicating the production process will be willingly borne by the forger.

There are documents, however, that, while needing to be secure, do not merit undue cost in their creation.

In accordance with a first aspect of the present invention, there is provided a method according to claim 1 with preferred features of the invention set out in the dependent claims.

Preferably, the output image is adapted to be printed onto a printing image area.

Typically, the method is used for security printing.

The term "vectorial grid" as used herein covers a two dimensional array of straight parallel lines or curved parallel lines, or a two dimensional array of dots where the dots define an array of substantially parallel lines.

The decoder is an optical decoder. The second image is revealable by viewing the output image through the optical decoder.

The grid comprises an array of paralled wavy lines. The lines maybe inclined to the top/bottom axis of the grid.

Alternatively, the grid comprises an array of dots defining parallel wavy lines.

The optical decoder comprises a lenticular screen or grating with the like alignment and spacing to the vectorial grid.

The vectorial grid is comprised of wavy lines or a wavy array of dots. The optical decoder has the same characteristics.

A method for security printing involving off-set dots in a security area is described in WO-A-01/87632. Here, the printing screen is modified, and a special decoding screen used to detect a hidden image In the modified area. However, the modification is not, even though only slight, *per se* undetectable by the naked eye, and has to be disguised through the use of peripheral dots "tapering off" the dot displacement with respect to background dots.

Security printing produced by the method does not necessarily show up on photocopying, so it may be arranged that photocopies may be made without the copier realising there is a hidden image, but that they would be detectable by the appropriate decoder screen.

Methods of security printing according to the invention will now be described with reference to the accompanying drawings, in which:
Figure 1 is a primary image;
Figure 2 is a secondary image;
Figure 3 is a first vectorial grid (not according to the invention);
Figure 4 is the grid of Figure 3 deformed using data from the secondary image (not according to the invention);
Figure 5 is an encoded vector image being the primary image mapped on to the deformed vectorial grid of Figure 4 (not according to the invention);
Figure 6 is an encoded bit map image made by applying the deformed grid of

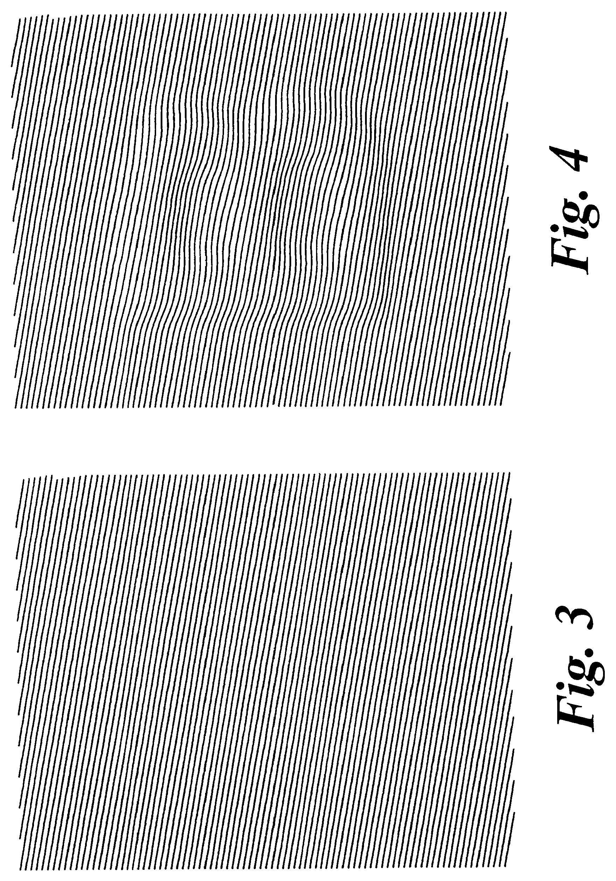

Figure 4 to the primary image (not according to the invention);

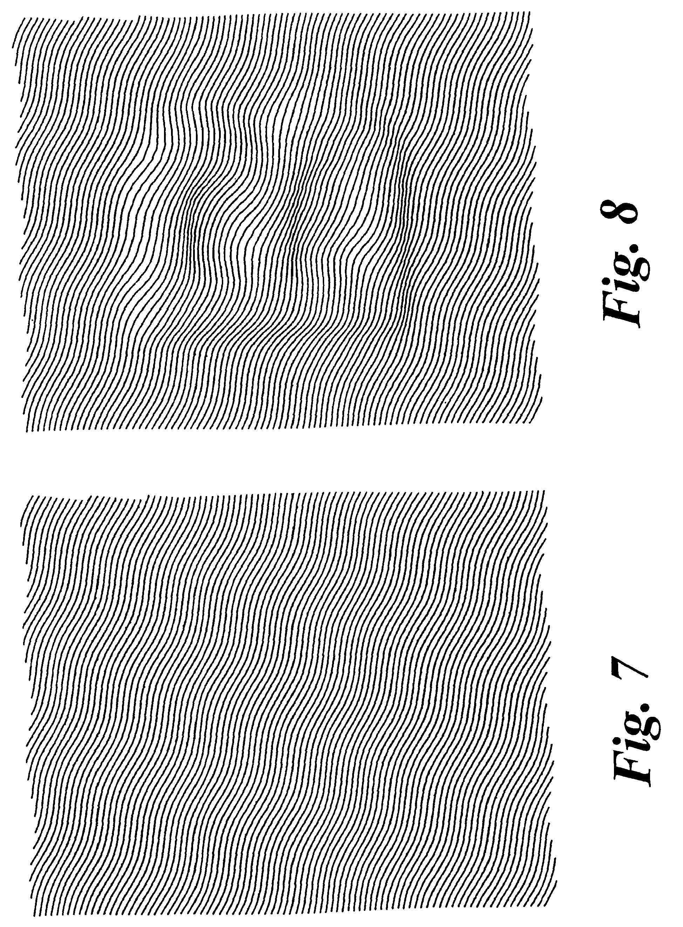

Figure 7 is a second vectorial grid;
Figure 8 is the grid of Figure 7 deformed using data from the secondary image;

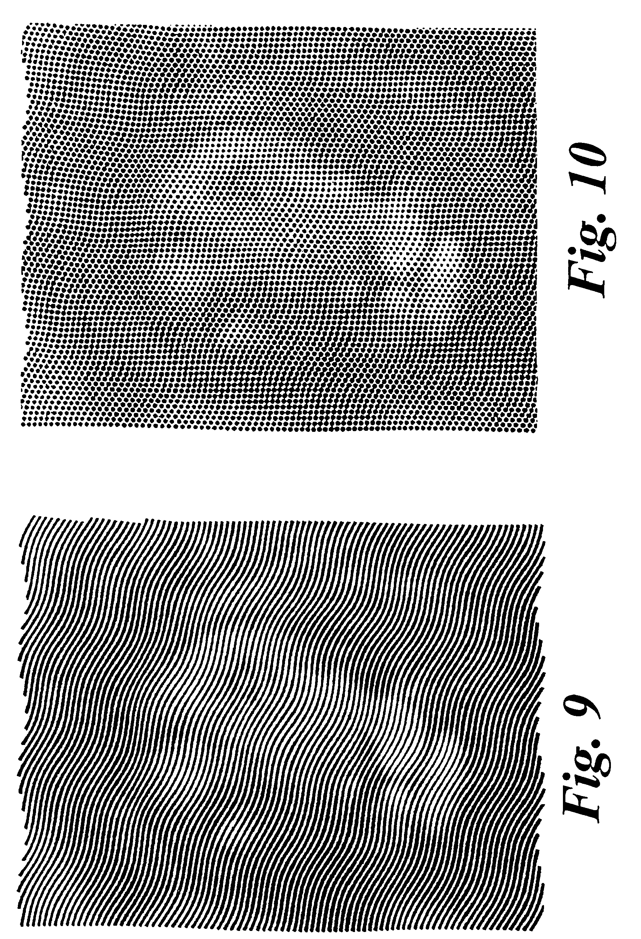

Figure 9 is an encoded vector image obtained by applying the deformed grid of Figure 8 to the primary image;
Figure 10 is an encoded bit map image obtained by applying the deformed grid of Figure 8 to the primary image;

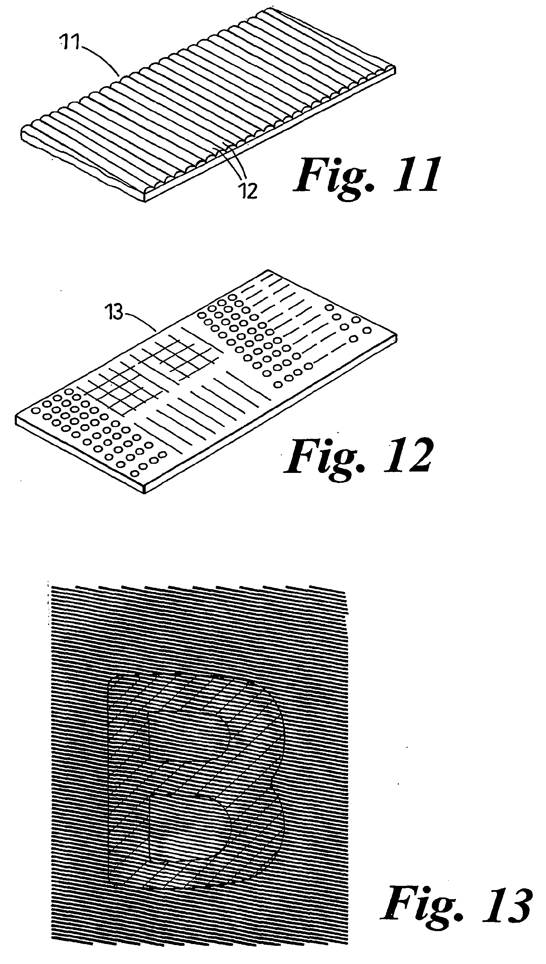

Figure 11 shows a first decoding screen (not according to the invention);
Figure 12 shows a secondary decoding screen (not according to the invention); and
Figure 13 shows the effect of using an appropriate decoding screen on an encoded image.

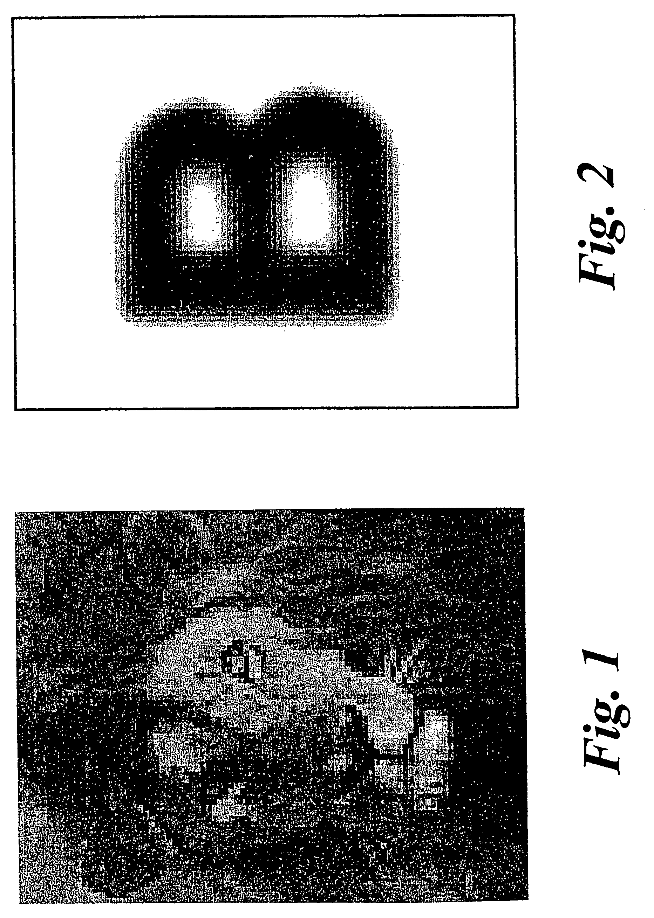

The drawings illustrate the methods for security printing comprising incorporating a secondary, hidden image (Figure 2) in a primary image (Figure 1), comprising the steps of:
creating a vectorial grid (Figures 3 and 7) adapted for mapping on to the printing image area;
applying a deformation to the vectorial grid (Figures 3 and 7) using data from the secondary image (Figure 2) resulting in a deformed grid (Figures 4 and 8);
mapping the primary image (Figure 1) on to the deformed vectorial grid (Figures 4 and 8) to create a primary image containing hidden information from the secondary image;
such hidden information being revealable by means of a decoder screen which discloses the vectorial grid information.

Figure 3 shows a vectorial grid of straight lines, while Figure 7 shows a vectorial grid of wavy lines, in each case inclined to the top/bottom axis A-A of the image space. The lines could, in each case, be replaced by corresponding arrays of dots.

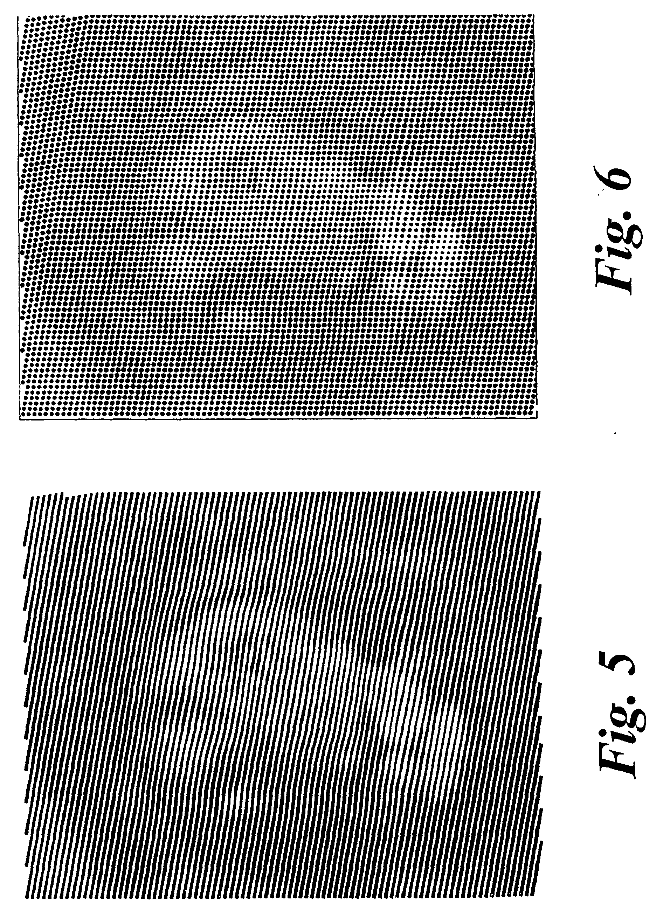

The final images, Figures 5, 6, 9 and 10 contain no information visible to the naked eye that they are other than they appear. They can even be arranged to be photocopiable without any hidden image showing up in the copy, although, of course, it can readily be arranged, by an convenient prior art techniques, that they are also not photocopiable.

Figure 11 shows a first decoding screen 11 suitable for use with images generated using the vectorial grid of Figure 3. It comprises a transparent decoding lens, which can be moulded in clear plastic, with cylindrical lenticules 12 aligned and spaced exactly as the vectorial grid lines by Figure 3.

A decoding screen suitable for images generated using the grid of Figure 7 would be similar, but with the lenticules 12 made wavy, corresponding to the waves of the Figure 7 grid.

Figure 12 illustrates a decoding screen 13 suitable for use with a vectorial grid comprising an array of dots rather than a grid of lines. Instead of the cylindrical lenticules of Figure 11, it has spherical lenticules correspondingly arrayed to the dots of the vectorial grid.

Figure 13 shows how the hidden secondary image is revealed when overlain with a decoding screen.

The method is suitable for both monochrome and colour images, and can be used equally well on still images and on movie frames, when the secondary image can itself be a movie image.

In colour printing, multiple secondary images can be hidden within different separations of a colour output of type CYMK (cyan, yellow, magenta, black), RGB (red, green, blue), or multiple spot colours. The different hidden images can be revealed individually by different colour filter decoding screens.

In an image of a person, personal data can be included as the secondary image. The final image may be a low-resolution raster image, and may be in colour.

The primary image may be a flat tint and the greyscale density from the secondary image used to encode it - the result looks like a flat tint. The hidden data in the final picture is revealed by a decoder screen which can comprise a lenticular screen or a grating, which is of wavy lines, or a wavy array of dots.

Multiple secondary images can be used in this way for different colours, as before, to make a CYMK, RGB or multiple spot colour image.

A "still" movie can be made by incorporating within a primary image date from a plurality of time-linked secondary images. As the decoder screen is turned through different angles, the secondary Images are revealed in sequence. Whilst this can, of course, be used in a security printing context, it can also be of more general appeal, in children's publications, greetings cards and point-of-sale promotions, for example.

As an additional security measure, the primary image may comprise an almost flat tint filled with microtext. The secondary image can be of line work or a grey scale image, and distorts the primary image by shifting letters or letter sequences in the microtext relative to others. The decoder reveals the hidden Image. Microtext will usually defeat photocopying because the photocopier does not have the resolving power to reproduce microtext.

In addition, the frequency of the lines or dots may vary across the grid. For example, if the grid comprises lines, the spacing of two adjacent lines in the grid may be different from the spacing between another two adjacent lines in the grid.

The method preceding the revealing step can be configured in printer-driving software.

## Claims

1. A method of incorporating a second image (Figure 2) into a primary image (Figure 1) to form an output image (Figure 9, Figure 10) and revealing the second image (Figure 2) by viewing the output image through an optical decoder (11), the method comprising
(a) creating a primary 2-D array of parallel lines or a 2-D array of dots where the dots define an array of parallel lines (Figure 7),
(b) applying deformations to the 2-D primary array using data from the second image to provide a deformed 2-D array of deformed parallel lines or dots defining an array of deformed parallel lines (Figure 8) whereby the lines or lines of dots are deviated from their original paths using the data from the second image,
(c) applying the deformed 2-D array to the primary image by changing the thickness of said lines or the size of said dots to create an output image (Figure 9, Figure 10) having the appearance of the primary image and containing hidden information from the second image, and
(d) revealing the second image (Figure 2) by viewing the output image (Figure 9, Figure 10) through an optical decoder (11), wherein the optical decoder (11) is a lenticular screen or grating having a like alignment and spacing to the primary 2-D array,
**characterised in that** the primary 2-D array (Figure 7) is an array of wavy parallel lines or dots defining an array of wavy parallel lines.

2. A method according to claim 1 wherein the frequency of the lines varies across the primary 2-D array (Figure 7) whereby the spacing of two adjacent lines in the primary 2-D array (Figure 7) is different from the spacing between another two adjacent lines in the primary 2-D array (Figure 7).

3. A method according to claim 1 or claim 2 wherein the optical decoder (11) is a transparent decoding lens with cylindrical or spherical lenticules (12) aligned and spaced as for the primary 2-D array (Figure 7).

## Patentansprüche

1. Verfahren zum Einfügen eines zweiten Bildes (Figur 2) in ein primäres Bild (Figur 1), um ein Ausgabebild (Figur 9, Figur 10) zu bilden, und zum Enthüllen des zweiten Bildes (Figur 2) durch Betrachten des Ausgabebildes durch einen optischen Decoder (11), wobei das Verfahren umfasst:
(a) Erzeugen einer primären 2-D-Anordnung von parallelen Linien oder einer 2-D-Anordnung von Punkten, bei der die Punkte eine Anordnung von parallelen Linien definieren (Figur 7),
(b) Anwenden von Deformationen auf die primäre 2-D-Anordnung unter Verwendung von Daten aus dem zweiten Bild, um eine deformierte 2-D-Anordnung von deformierten parallelen Linien oder von Punkten, die eine Anordnung von deformierten parallelen Linien definieren, bereitzustellen (Figur 8), wodurch die Linien oder die Linien von Punkten unter Verwendung der Daten aus dem zweiten Bild von ihren ursprünglichen Pfaden abgelenkt werden,
(c) Anwenden der deformierten 2-D-Anordnung auf das primäre Bild durch Verändern der Dicke der Linien oder der Größe der Punkte, um ein Ausgabebild (Figur 9, Figur 10) zu erzeugen, welches das Aussehen des primären Bildes aufweist und verborgene Information aus dem zweiten Bild enthält, und
(d) Enthüllen des zweiten Bildes (Figur 2) durch Betrachten des Ausgabebildes (Figur 9, Figur 10) durch einen optischen Decoder (11), wobei der optische Decoder (11) ein Lentikularschirm oder -gitter mit einer ähnlichen Ausrichtung und ähnlichen Abständen wie bei der primären 2-D-Anordnung ist,
**dadurch gekennzeichnet, dass** die primäre 2-D-Anordnung (Figur 7) eine Anordnung von welligen parallelen Linien oder von Punkten, die eine Anordnung von welligen parallelen Linien definieren, ist.

2. Verfahren nach Anspruch 1, wobei die Frequenz der Linien über die primäre 2-D-Anordnung (Figur 7) variiert, wodurch sich der Abstand zweier benachbarter Linien in der primären 2-D-Anordnung (Figur 7) vom Abstand zweier anderer benachbarter Linien in der primären 2-D-Anordnung (Figur 7) unterscheidet.

3. Verfahren nach Anspruch 1 oder 2, wobei der optische Decoder (11) eine transparente Decodierlinse mit zylindrischen oder sphärischen Teillinsen (12) ist, die wie bei der primären 2-D-Anordnung (Figur 7) ausgerichtet und beabstandet sind.

## Revendications

1. Procédé d'incorporation d'une deuxième image (figure 2) dans une image principale (figure 1) pour former une image de sortie (figure 9, figure 10) et révéler la deuxième image (figure 2) en observant l'image de sortie à travers un décodeur optique (11), le procédé consistant à :
(a) créer un réseau principal bidimensionnel de lignes parallèles ou un réseau bidimensionnel de points où les points définissent un réseau de lignes parallèles (figure 7),
(b) appliquer des déformations au réseau principal bidimensionnel en utilisant des données de la deuxième image pour fournir un réseau bidimensionnel déformé de lignes parallèles déformées ou de points définissant un réseau de lignes parallèles déformées (figure 8), moyennant quoi les lignes ou les lignes de points sont déviées de leurs trajets d'origine en utilisant les données de la deuxième image,
(c) appliquer le réseau bidimensionnel déformé à l'image principale en modifient l'épaisseur desdites lignes ou la taille desdits points pour créer une image de sortie (figure 9, figure 10) ayant l'apparence de l'image principale et contenant des informations cachées de la deuxième image, et
(d) révéler la deuxième image (figure 2) en observant l'image de sortie (figure 9, figure 10) à travers un décodeur optique (11), dans lequel le décodeur optique (11) est un écran lenticulaire ou un réseau ayant un même alignement et un même espacement que le réseau principal bidimensionnel,
**caractérisé en ce que** le réseau principal bidimensionnel (figure 7) est un réseau de lignes parallèles ondulées ou de points définissant un réseau de lignes parallèles ondulées.

2. Procédé selon la revendication 1, dans lequel la fréquence des lignes varie dans le réseau principal bidimensionnal (figure 7), moyennant quoi l'espacement de deux lignes adjacentes dans le réseau principal bidimensionnel (figure 7) est différent de l'espacement entre deux autres lignes adjacentes dans le réseau principal bidimensionnel (figure 7).

3. Procédé selon la revendication 1 ou la revendication 2, dans lequel le décodeur optique (11) est une lentille de décodage transparente avec des lenticules (12) cylindriques ou sphériques alignées et espacées comme pour le réseau principal bidimensionnel (figure 7).
